# EUROPEAN PATENT APPLICATION

(11) **EP 3 038 035 A1**
(43) Date of publication of application: **29.06.2016**
(21) Application number: 14837125.5
(22) Date of filing: 19.08.2014
(51) Int. Cl.: G06Q 20/12, G06Q 20/16, G06K 9/18

(54) **SHOPPING PAYMENT SYSTEM AND METHOD USING GRAPHICAL CODE INCLUDING BARCODE OR QR CODE**

(30) Priority: 20.08.2013 KR 20130098495
(71) Applicant: Instapay Inc., Seoul 153-772 (KR)
(72) Inventor: BAE, Jae Kwang, Seoul 135- 845 (KR)
(74) Representative: V.O.
(86) International application number: PCT/KR2014/007669
(87) International publication number: WO 2015/026129

(57) **Abstract**

A shopping payment system is disclosed. The shopping payment system comprises: a shopping server which stores information related to a plurality of products and provides a user terminal with the information related to the plurality of products; and a payment server which, if at least one of the plurality of products is selected by the user terminal and a payment request related to the selected at least one product is received, generates, in response to the payment request, at least one graphical code for payment for the at least one product on the basis of the information related to the at least one product. If the user mobile terminal recognizes the at least one graphical code and proceeds the payment procedure, the payment server authenticates the payment procedure, which has been proceeded by the mobile terminal, using the information related to the at least one product, which corresponds to the at least one graphical code.

## Description

### [Technical Field]

Embodiments of the inventive concepts described herein relate to technologies for paying the cost of products selected by users in internet shopping malls, shopping malls using smart televisions (TVs), or general TV home shopping malls.

### [Background Art]

Many people access an internet shopping mall, a shopping mall using a smart TV, or a TV home shopping mall and purchase products without directly visiting markets. These virtual shopping malls sell products at relative low prices, and users more conveniently purchase products.

Users access a virtual shopping mall, select desired products, and pay for the selected products using proper payment means. For example, the user enters his or her identification (ID) and password for an internet shopping mall, selects products, and pays for the selected products by entering his or her credit card number, password, and expiration date.

Also, recently, many mobile devices such as smartphones and tablet personal computers (PCs) have been used by users.

### [Disclosure]

### [Technical Problem]

Embodiments of the inventive concepts provide a shopping payment system for more simply paying the cost of products by displaying a graphical code including a bar code or a quick response (QR) code to proceed with payment in an internet shopping mall, a shopping mall using a smart TV, or a TV home shopping mall and recognizing the graphical code using a mobile terminal and a method therefor.

Embodiments of the inventive concepts provide a shopping payment system for proceeding with payment in a more secure way by separately having a user terminal which performs shopping and a mobile terminal which proceeds with payment and a method therefor.

### [Technical Solution]

One aspect of embodiments of the inventive concept is directed to provide a shopping payment system. The shopping payment system may include a shopping server configured to store information about a plurality of products and to provide the information about the plurality of products to a user terminal and a payment server configured to receive a payment request for at least one selected product if a user terminal selects the at least one of the plurality of products and to generate at least one graphical code for paying for the at least one selected product according to information about the at least one selected product in response to the payment request. If a mobile terminal of a user recognizes the at least one graphical code and proceeds with a payment procedure, the payment server may approve the payment procedure, proceeded with by the mobile terminal, using information about the at least one selected product corresponding to the at least one graphical code.

The payment server may receive information about a shopping cart including the at least one selected product from the shopping server and may separately generate a graphical code for each of the at least one selected product included in the shopping cart.

The payment server may receive information about a shopping cart including the at least one selected product from the shopping server and may generate a single graphical code for all of the at least one selected product included in the shopping cart.

The at least one graphical code may include at least one of a price of the at least one selected product, information about a serial number of the at least one selected product, information about a seller, information about a purchaser, or an order number.

The mobile terminal may display an option, for at least one payment means previously registered by the user, using the at least one graphical code as the mobile terminal recognizes the graphical code.

The graphical code may include a bar code or a quick response (QR) code.

The shopping server may interwork with at least one of an internet shopping mall or a television shopping mall.

Another aspect of embodiments of the inventive concept is directed to provide a payment processing method of a payment server in a shopping payment system including a shopping server, the payment server, and a user terminal. The payment processing method may include receiving a payment request including information about for at least one product selected by the user terminal among a plurality of products, generating at least one graphical code for paying for the at least one selected product according to the information about the at least one selected product in response to the payment request, and approving a payment procedure, proceeded with by a mobile terminal of a user, using information about the at least one selected product corresponding to the at least one graphical code, if the mobile terminal of the user recognizes the at least one graphical code and proceeds with the payment procedure.

The generating of the at least one graphical code for paying for the at least one selected product may include receiving information about a shopping cart including the at least one selected product from the shopping server and separately generating a graphical code for each of the at least one selected product included in the shopping cart.

The generating of the at least one graphical code for paying for the at least one selected product may include receiving information about a shopping cart including the at least one selected product from the shopping server and generating a single graphical code for all of the at least one selected product included in the shopping cart.

The payment processing method may further include transmitting an option, for at least one payment means previously registered by the user, to the mobile terminal using the at least one graphical code.

The approving of the payment procedure may include verifying the validity of the at least one graphical code according to at least one of a time when the at least one graphical code is generated, information about whether the at least one selected product is changed, or a shopping cart including the at least one selected product is changed.

The at least one graphical code may include at least one of a price of the at least one selected product, information about a serial number of the at least one selected product, information about a seller, information about a purchaser, or an order number.

The generating of the at least one graphical code for paying for the at least one selected product may include determining a mode selected by the user among a plurality of modes of generating the at least one graphical code and generating the at least one graphical code according to the determined mode.

### [Advantageous Effects]

A shopping payment system may more simply pay the cost of products by displaying a graphical code including a bar code or a quick response (QR) code to proceed with payment in an internet shopping mall, a shopping mall using a smart TV, or a TV home shopping mall and recognizing the graphical code using a mobile terminal

Also, a shopping payment system may proceed with payment in a more secure way by separately having a user terminal which performs shopping and a mobile terminal which proceeds with payment.

### [Description of Drawings]

FIG. 1 is a drawing illustrating a shopping payment system according to an exemplary embodiment of the inventive concept;
FIG. 2 is a drawing illustrating a list of products displayed on a personal computer (PC), a smart TV, or a TV and a list of a shopping cart displayed on the PC, the smart TV, or the TV according to an exemplary embodiment of the inventive concept;
FIG. 3 is a drawing illustrating generated graphical codes according to an exemplary embodiment of the inventive concept;
FIG. 4 is a drawing illustrating a screen shot displayed on a mobile terminal according to an exemplary embodiment of the inventive concept;
FIG. 5 is a drawing illustrating various modes of generating a graphical code according to various exemplary embodiments of the inventive concept;
FIG. 6 is a signal sequence diagram illustrating a shopping payment method according to an exemplary embodiment of the inventive concept; and
FIG. 7 is a block diagram illustrating a configuration of a payment server according to an exemplary embodiment of the inventive concept.

### [Best Mode]

Embodiments of the inventive concepts described herein relate to a shopping payment system for more simply paying the cost of products by displaying a graphical code including a bar code or a quick response (QR) code to proceed with payment in an internet shopping mall, a shopping mall using a smart TV, or a TV home shopping mall and recognizing the graphical code using a mobile terminal and a method therefor.

### [Mode for Invention]

Hereinafter, a description will be given in detail for exemplary embodiments of the inventive concept with reference to the following drawings.

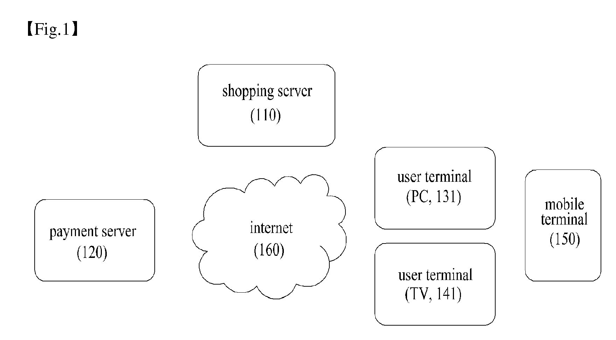

FIG. 1 is a drawing illustrating a shopping payment system according to an exemplary embodiment of the inventive concept.

Referring to FIG. 1, the shopping payment system according to an exemplary embodiment of the inventive concept may include a shopping server 110, a payment server 120, a user terminal 131 (e.g., a PC), a user terminal 141 (e.g., a TV), and a mobile terminal 150, which connect to each other over the Internet 160.

The shopping server 110 may operate an internet shopping mall, a shopping mall using a smart TV, or a general TV home shopping mall. A user may access at least one of the shopping malls using the user terminal 131 (e.g., the PC) or the user terminal 141 (e.g., the TV).

In this case, the user may select at least one of a plurality of products sold in the shopping malls. For example, the user may click on a desired product in the internet shopping mall, and may push a selection button for the desired product or may call a call center to select the desired product in the shopping mall using the smart TV or the general TV home shopping mall.

In this case, according to various exemplary embodiments of the inventive concept, the payment server 120 may generate a graphical code to proceed with payment of products selected by the user. The graphical code may include a bar code or a quick response (QR) code.

Specifically, the payment server 120 may obtain a price of a product selected by the user, information about a serial number of the product, information (e.g., an identification (ID)) about a seller, information about a purchaser, and information about an order number from the shopping server 110 and may generate a graphical code according to the obtained information.

The graphical code generated by the payment server 120 may be displayed on the user terminal 131 (e.g., the PC) and the user terminal 141 (e.g., the TV). In this case, the user may recognize the graphical code using the mobile terminal 150. Specifically, the mobile terminal 150 may extract information necessary for payment by recognizing the graphical code using its camera. Of course, a graphical code payment application for executing this algorithm may be previously installed in the mobile terminal 150. Alternatively, if the mobile terminal 150 recognizes the graphical code while the graphical code payment application is not installed in the mobile terminal 150, a page for installing the graphical code payment application may be automatically loaded into the mobile terminal 150.

If the mobile terminal 150 recognizes the graphical code, the graphical code payment application may determine whether there are payment means previously registered by the user and may display the previously registered payment means to the user. In this case, the graphical code payment application may display payment means which are available to the shopping server 110 and payments means which are unavailable to the shopping server 110 in a different way among the payment means previously registered by the user. The user may proceed with a payment procedure using at least one of the previously registered payment means. This payment procedure may be approved by the payment server 120.

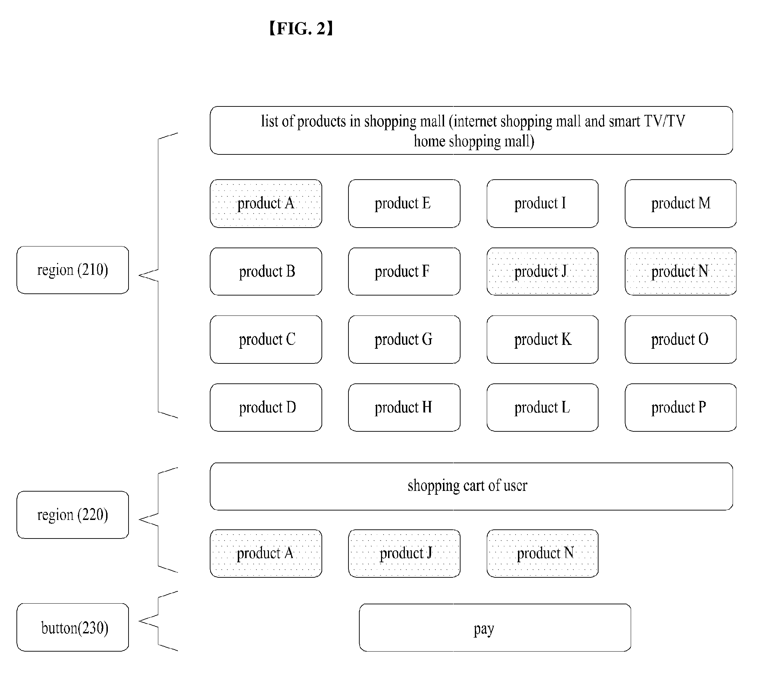

FIG. 2 is a drawing illustrating a list of products displayed on a personal computer (PC), a smart TV, or a TV and a list of a shopping cart displayed on the PC, the smart TV, or the TV according to an exemplary embodiment of the inventive concept.

Referring to FIG. 2, a region 210 may display a list of products in a shopping mall. The list of the products in the shopping mall may include a product A, a product B, a product C, a product D, a product E, a product F, a product G, a product H, a product I, a product J, a product K, a product L, a product M, a product N, a product O, and a product P. It may be assumed that a user selects the product A, the product J, and the product N among a plurality of products displayed on the region 210.

If the user selects the product A, the product J, and the product N, a region 220 may display a shopping cart of the user. In this case, the shopping cart of the user may include the product A, the product J, and the product N selected by him or her.

Also, the user may push a 'pay' button 230 to pay for some or all of products included in the shopping cart. If the user pushes the 'pay' button 230, information (or information about the shopping cart) about the product A, the product J, and the product N included in the shopping cart may be transmitted from a shopping server to a payment server.

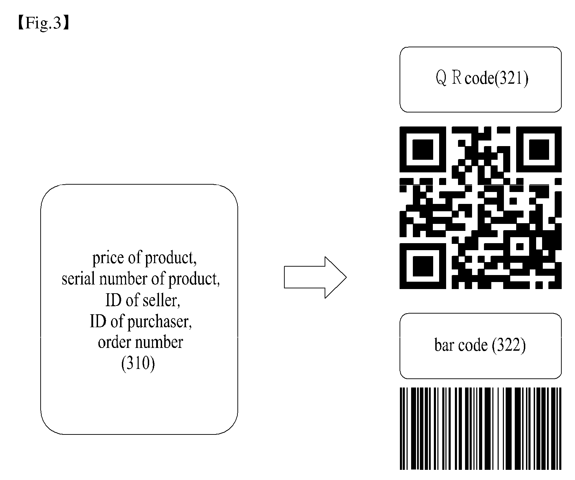

FIG. 3 is a drawing illustrating generated graphical codes according to an exemplary embodiment of the inventive concept.

Referring to FIG. 3, as a user requests a payment server to pay for products selected by him or her, the payment server may obtain at least one of a price of each of the products selected by him or her, information about a serial number of each of the products selected by him or her, information about a seller, information about a purchaser, or information about an order number (see a reference numeral 310).

The payment server may generate at least one of a quick response (QR) code 321 or a bar code 322 using the obtained information. A user terminal (e.g., a PC, a TV, a smart TV, and the like) may display the generated QR code 321 or bar code 322. Particularly, according to an exemplary embodiment of the inventive concept, the user may select at least one of the QR code 321 or the bar code 322. The payment server may generate at least one of the QR code 321 or the bar code 322 depending on the selection of the user.

Also, the payment server may manage the validity of the QR code 321 or the bar code 322. For example, the QR code 321 or the bar code 322 may have a limited available time. In other words, if a predetermined time is exceeded from a time when the QR code 321 or the bar code 322 is generated, the QR code 321 or the bar code 322 may be cancelled. If products (or a shopping cart) selected by the user are changed, the payment server may cancel the previously generated QR code 321 or bar code 322.

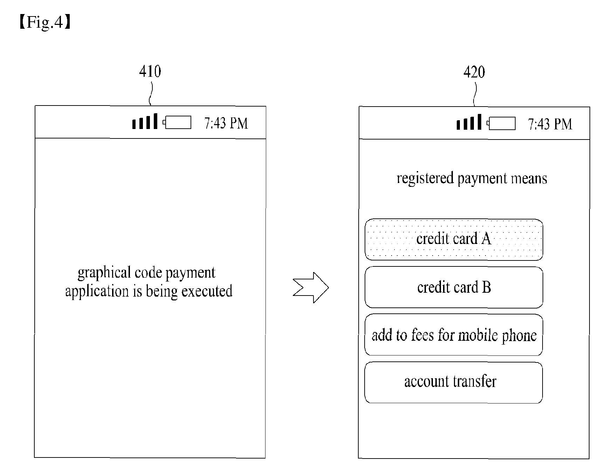

FIG. 4 is a drawing illustrating a screen shot displayed on a mobile terminal according to an exemplary embodiment of the inventive concept.

Referring to FIG. 4, the mobile terminal may recognize a graphical code displayed on a user terminal and may execute a graphical code payment application in response to the recognition of the graphical code or manually (see a reference numeral 410). If the graphical code payment application is not installed in the mobile terminal, the mobile terminal may move to a page for installing the graphical code payment application.

If the graphical code payment application is executed, the mobile terminal may display payment means previously registered by the user (see a reference numeral 420). In this case, an exemplary embodiment of the inventive concept is exemplified as payment means supported by a shopping server and payment means which are not supported by the shopping server may be displayed in a different way among the payment means previously registered by the user.

Also, the user may pay for products included in a shopping cart by selecting a desired payment means among payment means displayed on the mobile terminal.

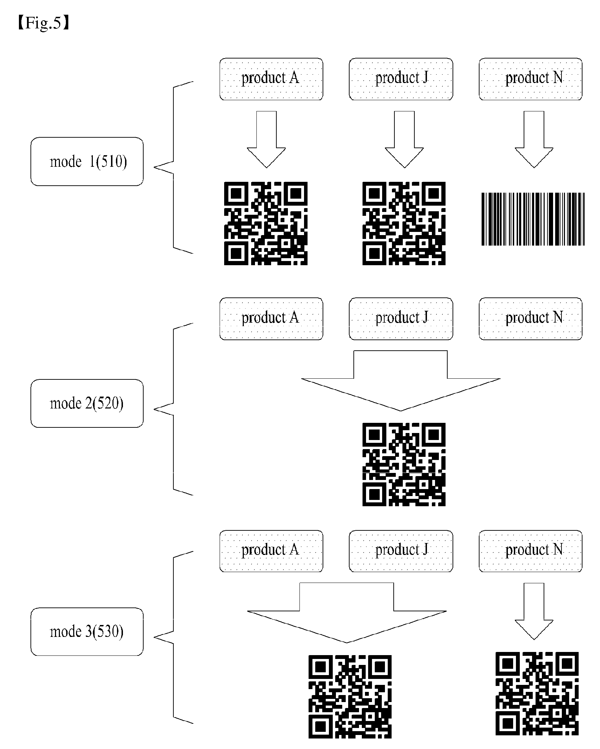

FIG. 5 is a drawing illustrating various modes of generating a graphical code according to various exemplary embodiments of the inventive concept.

Referring to FIG. 5, a graphical code may be generated in the various modes.

In a mode 1 510, a graphical code may be separately generated for each of products included in a shopping cart. Therefore, graphical codes corresponding to the products included in the shopping cart may be simultaneously or sequentially displayed on a user terminal.

In a mode 2 520, a single graphical code may be generated for all of the products included in the shopping cart. Therefore, a user may simply complete payment of all the products by recognizing the single graphical code.

In a mode 3 530, the products included in the shopping cart may be grouped into two or more groups and a graphical code may be separately generated for each of the groups.

Also, according to an exemplary embodiment of the inventive concept, the user may select a desired mode among the mode 1 510, the mode 2 520, and the mode 3 530 according to his or her preference. A payment server may generate a graphical code depending on the mode selected by the user.

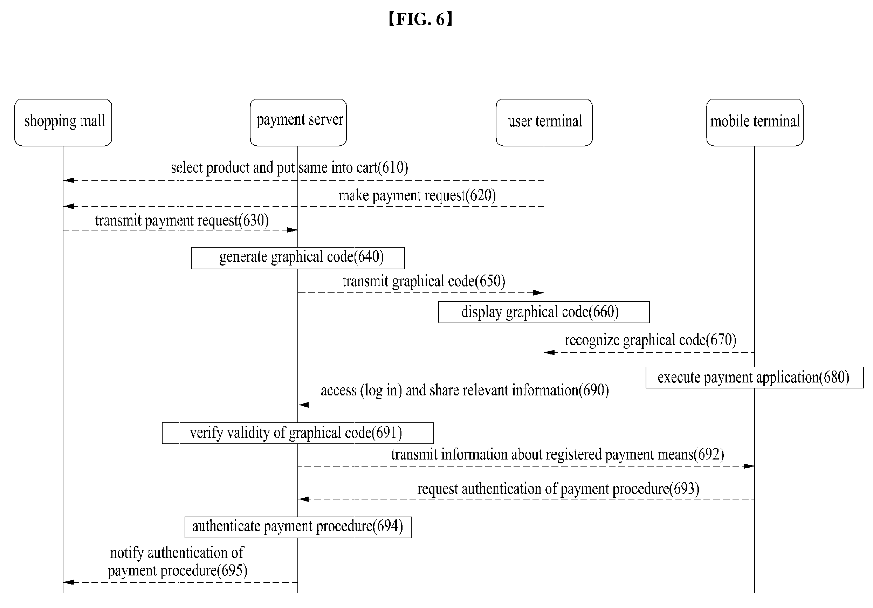

FIG. 6 is a signal sequence diagram illustrating a shopping payment method according to an exemplary embodiment of the inventive concept.

Referring to FIG. 6, in step 610, a user may select desired products using a user terminal and may put the selected products into a shopping cart.

Also, in step 620, the user terminal may request a shopping server to pay for at least some of the products included in the shopping cart.

In step 630, the shopping server may transmit a payment request to a payment server. In this case, in step 640, the payment server may generate a graphical code using information (e.g., a price of a product, information about a serial number of the product, information about a seller, information about a purchaser, or an order number, and the like) about the shopping cart included in the payment request.

In this case, there may be several modes of generating the graphical code. The graphical code may be generated according to a mode selected by the user. If there is no mode selected by the user, a mode set to a default may be applied.

In step 650, the payment server may transmit the generated graphical code to the user terminal. In step 660, the user terminal may display the graphical code. In this case, in step 670, a mobile terminal may recognize the graphical code displayed on the user terminal using its camera and the like. In step 680, the mobile terminal may execute a payment application.

In step 690, the mobile terminal may access the payment server and may share information extracted from the graphical code with the payment server. In this case, in step 691, the payment server may verify the validity of the graphical code according to the information shared by the mobile terminal. Particularly, the payment server may verify the validity of the graphical code according to at least one of a time when the graphical code is generated, information about whether at least one product selected by the user is changed, or information about whether a shopping cart including the at least one product selected by the user is changed.

If the verification is completed, in step 692, the payment server may transmit information about payment means previously registered by the user to the mobile terminal. In this case, in step 693, the user may proceed with a payment procedure using one of payments means displayed on the mobile terminal and may transmit an approval request to the payment server. In step 694, the payment server may approve the payment procedure proceeded with by the mobile terminal. In step 695, the payment server may notify the shopping server of the approved result.

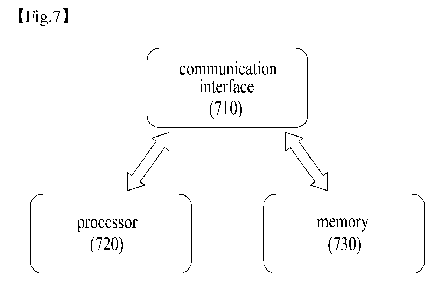

FIG. 7 is a block diagram illustrating a configuration of a payment server according to an exemplary embodiment of the inventive concept.

Referring to FIG. 7, the payment server according to an exemplary embodiment of the inventive concept may include a communication interface 710, a processor 720, and a memory 730.

The communication interface 710 may receive a payment request including information about at least one product selected by a user terminal among a plurality of products. The processor 720 may generate at least one graphical code for paying for the at least one product according to information about the at least one product in response to the payment request. If a mobile terminal of a user recognizes the at least one graphical code and proceeds with a payment procedure, the processor 720 may approve the payment procedure proceeded with by the mobile terminal using the information about the at least one product corresponding to the at least one graphical code. The memory 730 may temporarily or permanently store information requested by the processor 720.

Since details described with reference to FIGS. 1 to 6 may be applied to the payment server shown in FIG. 7 without change, more detailed description for the payment server is omitted.

The foregoing devices may be realized by hardware elements, software elements and/or combinations thereof. For example, the devices and components illustrated in the exemplary embodiments of the inventive concept may be implemented in one or more general-use computers or special-purpose computers, such as a processor, a controller, an arithmetic logic unit (ALU), a digital signal processor, a microcomputer, a field programmable array (FPA), a programmable logic unit (PLU), a microprocessor or any device which may execute instructions and respond. A processing unit may implement an operating system (OS) or one or software applications running on the OS. Further, the processing unit may access, store, manipulate, process and generate data in response to execution of software. It will be understood by those skilled in the art that although a single processing unit may be illustrated for convenience of understanding, the processing unit may include a plurality of processing elements and/or a plurality of types of processing elements. For example, the processing unit may include a plurality of processors or one processor and one controller. Also, the processing unit may have a different processing configuration, such as a parallel processor.

Software may include computer programs, codes, instructions or one or more combinations thereof and configure a processing unit to operate in a desired manner or independently or collectively control the processing unit. Software and/or data may be permanently or temporarily embodied in any type of machine, components, physical equipment, virtual equipment, computer storage media or units or transmitted signal waves so as to be interpreted by the processing unit or to provide instructions or data to the processing unit. Software may be dispersed throughout computer systems connected via networks and be stored or executed in a dispersion manner. Software and data may be recorded in one or more computer-readable storage media.

The methods according to the above-described exemplary embodiments of the inventive concept may be recorded in computer-readable media including program instructions to implement various operations embodied by a computer. The media may also include, alone or in combination with the program instructions, data files, data structures, and the like. The program instructions recorded in the media may be designed and configured specially for the exemplary embodiments of the inventive concept or be known and available to those skilled in computer software. Examples of computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules to perform the operations of the above-described exemplary embodiments of the inventive concept, or vice versa.

While a few exemplary embodiments have been shown and described with reference to the accompanying drawings, it will be apparent to those skilled in the art that various modifications and variations can be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents.

Therefore, other implements, other embodiments, and equivalents to claims are within the scope of the following claims.

## Claims

1. A shopping payment system, comprising:
a shopping server configured to store information about a plurality of products and to provide the information about the plurality of products to a user terminal; and
a payment server configured to receive a payment request for at least one selected product if a user terminal selects the at least one of the plurality of products and to generate at least one graphical code for paying for the at least one selected product according to information about the at least one selected product in response to the payment request,
wherein if a mobile terminal of a user recognizes the at least one graphical code and proceeds with a payment procedure, the payment server approves the payment procedure, proceeded with by the mobile terminal, using information about the at least one selected product corresponding to the at least one graphical code.

2. The shopping payment system of claim 1, wherein the payment server receives information about a shopping cart including the at least one selected product from the shopping server and separately generates a graphical code for each of the at least one selected product included in the shopping cart.

3. The shopping payment system of claim 1, wherein the payment server receives information about a shopping cart including the at least one selected product from the shopping server and generates a single graphical code for all of the at least one selected product included in the shopping cart.

4. The shopping payment system of claim 1, wherein the at least one graphical code comprises at least one of a price of the at least one selected product, information about a serial number of the at least one selected product, information about a seller, information about a purchaser, or an order number.

5. The shopping payment system of claim 1, wherein the mobile terminal displays an option, for at least one payment means previously registered by the user, using the at least one graphical code as the mobile terminal recognizes the graphical code.

6. The shopping payment system of claim 1, wherein the graphical code comprises a bar code or a quick response (QR) code.

7. The shopping payment system of claim 1, wherein the shopping server interworks with at least one of an internet shopping mall or a television shopping mall.

8. A payment processing method of a payment server in a shopping payment system including a shopping server, the payment server, and a user terminal, the method comprising:
receiving a payment request including information about for at least one product selected by the user terminal among a plurality of products;
generating at least one graphical code for paying for the at least one selected product according to the information about the at least one selected product in response to the payment request; and
approving a payment procedure, proceeded with by a mobile terminal of a user, using information about the at least one selected product corresponding to the at least one graphical code, if the mobile terminal of the user recognizes the at least one graphical code and proceeds with the payment procedure.

9. The method of claim 8, wherein the generating of the at least one graphical code for paying for the at least one selected product comprises:
receiving information about a shopping cart including the at least one selected product from the shopping server; and
separately generating a graphical code for each of the at least one selected product included in the shopping cart.

10. The method of claim 8, wherein the generating of the at least one graphical code for paying for the at least one selected product comprises:
receiving information about a shopping cart including the at least one selected product from the shopping server; and
generating a single graphical code for all of the at least one selected product included in the shopping cart.

11. The method of claim 8, further comprising:
transmitting an option, for at least one payment means previously registered by the user, to the mobile terminal using the at least one graphical code.

12. The method of claim 8, wherein the approving of the payment procedure comprises:
verifying the validity of the at least one graphical code according to at least one of a time when the at least one graphical code is generated, information about whether the at least one selected product is changed, or a shopping cart including the at least one selected product is changed.

13. The method of claim 8, wherein the at least one graphical code comprises at least one of a price of the at least one selected product, information about a serial number of the at least one selected product, information about a seller, information about a purchaser, or an order number.

14. The method of claim 8, wherein the generating of the at least one graphical code for paying for the at least one selected product comprises:
determining a mode selected by the user among a plurality of modes of generating the at least one graphical code; and
generating the at least one graphical code according to the determined mode.
